# EUROPÄISCHE PATENTSCHRIFT

(11) **EP 2 628 626 B1**
(45) Veröffentlichungstag und Bekanntmachung des Hinweises auf die Patenterteilung: **25.02.2015**
(21) Anmeldenummer: 12197119.6
(22) Anmeldetag: 14.12.2012
(51) Int. Cl.: F16D 3/18, F16D 11/10, B60K 17/28

(54) **Traktor mit Zapfwellengetriebe**
Tractor with p.t.o. shaft drive
Tracteur avec engrenage d'arbre de prise de force

(30) Priorität: 15.02.2012 DE 102012002800
(43) Veröffentlichungstag der Anmeldung: 21.08.2013
(73) Patentinhaber: CLAAS Tractor S.A.S., 78141 Vélizy-Villacoublay Cedex (FR)
(72) Erfinder: Momal, Pascal, 78140 Velízy Villacoublay (FR); Vallee, Sebastien, 78170 La Celle Saint Cloud (FR)

(56) Entgegenhaltungen:
- AT-B- 355 919
- GB-A- 1 562 565
- JP-A- S58 221 724
- JP-U- S57 163 424
- US-A- 1 645 224

## Beschreibung

Die vorliegende Erfindung betrifft einen Traktor mit einem Zapfwellengetriebe. Eine über ein solches Getriebe angetriebene Zapfwelle ist an der Karosserie des Traktors hinten oder vorne herausgeführt, um ein Anbaugerät wie etwa ein Mähwerk daran anschließen und betreiben zu können.

Eine Einrichtung nach dem Oberbegriff des Anspruchs 1 ist aus GB 1 562 565 bekannt.

Während der Motor eines Traktors in dessen Karosserie im Allgemeinen zentral angeordnet ist, befindet sich das Zapfwellengetriebe am vorderen Ende der Karosserie, in unmittelbarer Nachbarschaft zu einem vorn herausgeführten Zapfwellenanschluss, so dass eine Welle, die Drehmoment des Motors auf das Zapfwellengetriebe überträgt, innerhalb der Karosserie eine große Entfernung zwischen Motor und Zapfwellengetriebe überbrücken muss. Wenn diese Welle entfernt werden muss, um, z.B. für Reparaturen oder Umbauten, Zugriff auf dahinterliegende Komponenten des Traktors zu erhalten, dann ist dies im Allgemeinen nur möglich, wenn auch das Zapfwellengetriebe ausgebaut wird. Arbeiten, die einen Ausbau der Welle erfordern, sind daher sehr zeitaufwendig und dementsprechend kostspielig.

Neben Fahrwerk und Zapfwellengetriebe kann ein Traktor diverse weitere Verbraucher aufweisen, die vom Motor angetrieben werden müssen. Um Kraft auf diese Verbrauchen zu übertragen, werden häufig Treibriemen eingesetzt, die um antriebs- und abtriebsseitige Riemenscheiben geschlungen sind. Der Treibriemen ist ein Verschleißartikel, der im Laufe der Betriebszeit eines Traktors diverse Male ausgetauscht werden muss. Die Riemenscheiben sollten daher gut zugänglich sein und insbesondere nicht mitten auf einer Welle montiert sein, an deren Ende der Treibriemen nicht abgestreift werden kann, z.B. weil dort großformatige Komponenten wie etwa der Motor selber, das Zapfwellengetriebe oder dergleichen angeordnet sind. Diese Randbedingungen schränken die Möglichkeiten zur Anbringung von Treibriemen stark ein und zwingen mitunter zu Lösungen, die hinsichtlich Platzbedarf und Gewicht nicht ökonomisch sind.

Aufgabe der vorliegenden Erfindung ist, einen Traktor zu schaffen, bei dem eine sich zwischen Motor und Zapfwellengetriebe erstreckende Welle Reparaturmaßnahmen nicht mehr als nötig behindert.

Die Aufgabe wird gelöst, indem bei einem Traktor mit einem Motor, einem Zapfwellengetriebe und einer eine Riemenscheibe tragenden, den Motor mit dem Zapfwellengetriebe verbindenden Welle an einem ersten Abschnitt der Welle eine Hülse axial zwischen einer Verriegelungsstellung, in der sie in eine Fassung des zweiten Abschnitts der Welle radial unbeweglich eingreift, und einer Entriegelungsstellung verschiebbar ist, in der ein Endstück des ersten Abschnitts der Welle frei ist, eine seitliche Öffnung der Fassung zu passieren. Während in der Verriegelungsstellung das Endstück des ersten Wellenabschnitts am zweiten Wellenabschnitt fixiert ist, kann es in der Entriegelungsstellung radial bewegt werden, so dass zwischen den zwei Wellenabschnitten eine Lücke geschaffen werden kann. Diese Lücke kann genutzt werden, um einen Treibriemen hindurchzuführen. Daher kann eine Riemenscheibe auch an der Welle, zwischen Motor und Zapfwellengetriebe, vorgesehen sein. Die Beweglichkeit des ersten Wellenabschnitts kann aber auch genutzt werden, um diesen im Bedarfsfall ganz auszubauen.

In der Praxis ist die seitliche Öffnung der Fassung etwas breiter als das Endstück des ersten Wellenabschnitts, um diesen passieren lassen zu können, wohingegen der Durchmesser der Hülse größer ist, sodass diese die seitliche Öffnung nicht passieren kann und daher das Endstück in der Verriegelungsstellung sicher in radialer Richtung fixiert.

Die Hülse kann ein Wälzlager sein, von dem ein äußerer Ring in der Verriegelungsstellung eine Innenfläche der Fassung berührt, während ein innerer Ring auf den ersten Wellenabschnitt aufgeschoben sein kann. Mit Hilfe des Wälzlagers können die Achsen des ersten und zweiten Wellenabschnitts präzise aufeinander ausgerichtet werden, ohne dass dadurch in nennenswertem Umfang Drehmoment zwischen den Wellenabschnitten übertragen würde. Dadurch wird die Voraussetzung geschaffen, um das Zapfwellengetriebe bei Nichtgebrauch vom Motor abkoppeln zu können.

Vorzugsweise ist die Hülse in der Verriegelungsstellung durch einen an der Fassung lösbar befestigten Flansch gesichert, wobei der erste Abschnitt der Welle sich durch eine Öffnung des Flansches erstreckt, dessen radiale Abmessung kleiner ist als die der Hülse, so dass letztere durch den Flansch in der Fassung eingeschlossen ist.

Vorzugsweise ist die Hülse an dem Flansch befestigt. Wenn der Flansch von der Fassung gelöst und in axialer Richtung abgezogen wird, wird somit gleichzeitig die Hülse aus der Fassung herausgezogen, sodass sie den Durchgang des Endstücks des ersten Wellenabschnitts durch die seitliche Öffnung der Fassung nicht mehr behindert.

Zur Drehmomentübertragung zwischen erstem und zweitem Wellenabschnitt ist vorzugsweise ein erstes homokinetisches Gelenk mit zwei gegeneinander schwenkbaren Gelenkhälften vorgesehen. Das homokinetische Gelenk gewährleistet eine gleichmäßige Drehmomentübertragung, ohne die Gefahr eines Verklemmens der Welle, auch wenn sich die Karosserie des Traktors unter den im Einsatz auf sie wirkenden Kräften elastisch verformt.

Der oben erwähnte Flansch kann zweckmäßigerweise eine der zwei Gelenkhälften bilden.

Die andere Gelenkhälfte muss dann, um Drehmoment übertragen zu können, an dem ersten Wellenabschnitt drehfest sein. Vorzugsweise ist sie auch axial verschiebbar, um der axialen Verschiebung des Flansches zwischen Verriegelungs- und Entriegelungsstellung folgen zu können.

Wenn die zwei Gelenkhälften durch eine Axialbewegung miteinander in Eingriff und außer Eingriff bringbare Verzahnungen aufweisen, kann das erste homokinetische Gelenk auch die Funktion einer Kupplung zur selektiven Drehmomentübertragung zwischen erstem und zweitem Wellenabschnitt übernehmen.

Um die hierfür erforderliche Axialbewegung zu steuern, kann eine Schaltgabel vorgesehen sein, die an einer in Umfangsrichtung umlaufenden Kontur der axial verschiebbaren Gelenkhälfte angreift.

Um sich einer elastischen Verformung der Karosserie leichter anpassen zu können, kann ein dritter Wellenabschnitt durch ein zweites homokinetisches Gelenk mit dem ersten oder zweiten Wellenabschnitt verbunden sein.

So kommt von erstem und zweitem Wellenabschnitt einer zwischen dem jeweils anderen Wellenabschnitt und dem dritten Wellenabschnitt zu liegen. Dieser eine Wellenabschnitt kann in der Entriegelungsstellung entnehmbar sein, um einen ungehinderten Zugriff auf dahinterliegende Einbauten des Traktors zu ermöglichen. Vorzugsweise ist dieser eine Wellenabschnitt von dem dritten Wellenabschnitt durch eine Bewegung in axialer Richtung lösbar.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch den vorderen Bereich der Karosserie eines Traktors;
- Fig. 2: ein kinematisches Diagramm der in Fig. 1 gezeigten Komponenten;
- Fig. 3: einen zu Fig. 1 analogen Schnitt, in dem eine sich zwischen Motor und Zapfwellengetriebe erstreckende Welle in zwei Teile zerlegt ist, indem diese nach vorn gedrückt worden ist, um Zugang zu einem Hilfsantriebsriemen zu erhalten;
- Fig. 4: einen vergrößerten Schnitt durch einen Endbereich eines Hauptwellenabschnitts der Welle und ein diesen Endbereich aufnehmendes Lager eines getriebeseitigen Wellenabschnitts;
- Fig. 5: eine perspektivische Ansicht des Zapfwellengetriebes;
- Fig. 5a: eine weitere perspektivische Ansicht des Zapfwellengetriebes mit aufgesetztem Flansch;
- Fig. 6: einen zu Fig. 1 und 3 analogen Schnitt, in dem der Endbereich des Hauptwellenabschnitts von dem getriebeseitigen Wellenabschnitt gelöst ist; und
- Fig. 7: die Karosserie in einem partiell zerlegten Zustand.

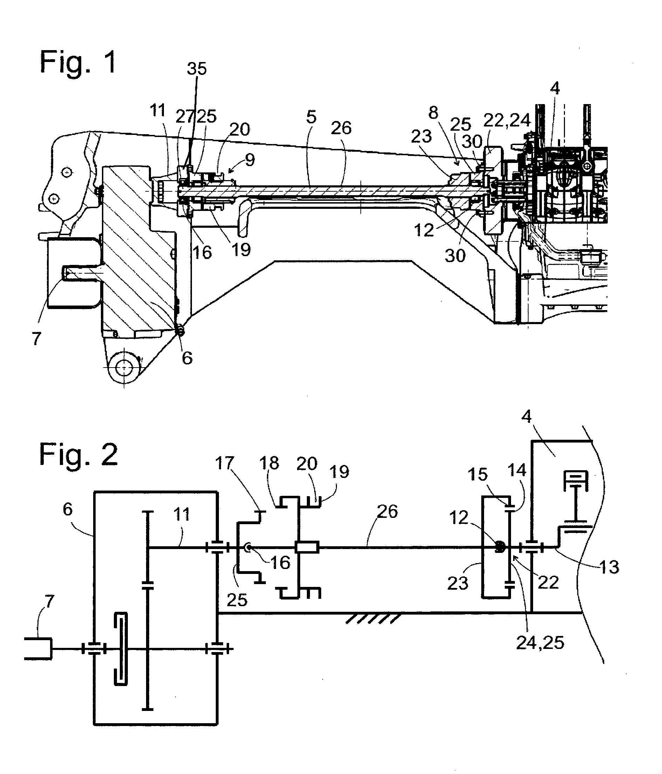

Fig. 1 zeigt einen schematischen Längsschnitt durch den vorderen Bereich der Karosserie eines Traktors. Eine Welle 5 verbindet einen in der Karosserie zentral montierten Dieselmotor 4 mit einem Zapfwellengetriebe 6, dessen Zapfwellenanschluss 7 an einem vorderen Ende der Karosserie herausgeführt ist. Die Welle 5 ist durch zwei homokinetische Gelenke 8, 9 gegliedert in einen dem Motor 4 zugewandten Abschnitt 22, einen langgestreckten Hauptwellenabschnitt 26 und einen getriebeseitigen Wellenabschnitt 11.

Der dem Motor 4 zugewandte Abschnitt 22 der Welle 5 umfasst einen fest mit einer Kurbelwelle 13 (siehe Fig. 2) des Motors 4 verbundenen Flansch 24, an dem ein Basisflansch 25 des ersten homokinetischen Gelenks 8 durch Schrauben 30 lösbar befestigt ist. Einer der beiden Flansche 24, 25 kann als Riemenscheibe ausgebildet sein, an dem ein in der Figur nicht gezeigter Riemen zum Antreiben von ebenfalls nicht dargestellten Hilfsaggregaten des Traktors umläuft.

In einer Aussparung des Basisflanschs 24 ist eine Hülse 12 aufgenommen, die, indem sie das motorseitige Ende des Hauptwellenabschnitts 26 radial fixiert und geringfügige, auf elastische Verformung des Traktorchassis zurückgehende Schwenkbewegungen des Hauptwellenabschnitts 26 zulässt, als ein Kugelgelenk wirkt und als solches in dem kinematischen Diagramm der Fig. 2 dargestellt ist. Eine Außenverzahnung 14 des Basisflanschs 25 greift mit die Schwenkbewegungen nicht behinderndem axialem und radialem Spiel in eine Innenverzahnung 15 eines an dem Hauptwellenabschnitts 26 drehfest und axial unbeweglich dem Basisflansch 25 gegenüberliegend verankerten Gegenstücks 23 ein, um die Drehmomentübertragung vom Motor 4 auf den Hauptwellenabschnitt 26 zu gewährleisten, auch wenn dieser und die Kurbelwelle 13 nicht exakt koaxial verlaufen.

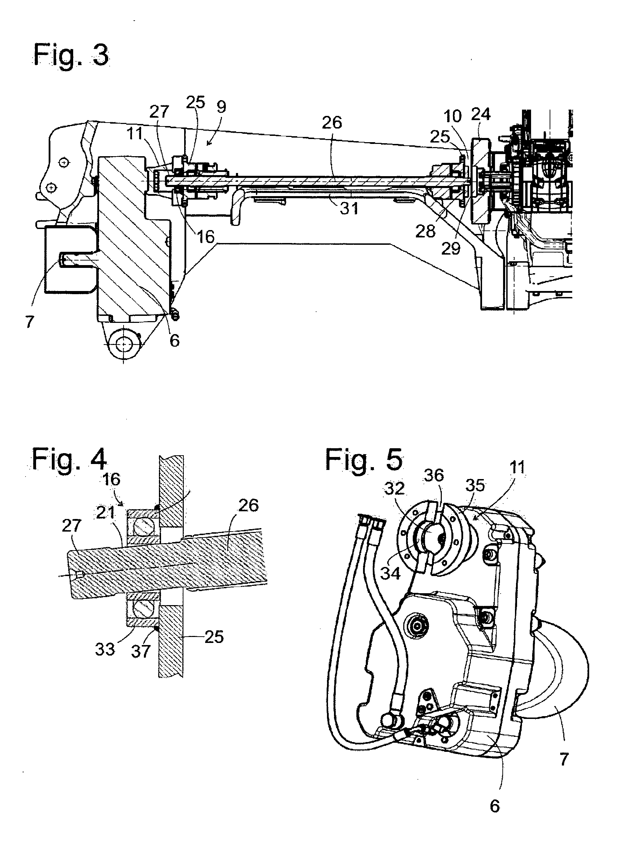

Der getriebeseitige Wellenabschnitt 11 hat die Form eines Bechers, in dessen Hohlraum ein motorfernes Ende 27 des Hauptwellenabschnitts 26 durch ein Wälzlager 16 gehalten ist. Ein Basisflansch 25 des zweiten homokinetischen Gelenks 9 ist spiegelbildlich zu dem des ersten Gelenks 8 am dem Motor zugewandten Ende des Wellenabschnitts 11 befestigt. Das am Gelenk 8 vorhandene Wälzlager kann hier fehlen, da sein Einbauort axial mit einer Verjüngung 21 (siehe Fig. 4) des Hauptwellenabschnitts 26 zusammenfällt, so dass der Hauptwellenabschnitt 26 sich mit radialem Spiel durch den Basisflansch 25 hindurch erstreckt. Infolgedessen fungiert hier das Wälzlager 16 in ähnlicher Weise wie beim ersten homokinetischen Gelenk 8 die Hülse 12 als ein Kugelgelenk, das ein Ende des Hauptwellenabschnitts 26 fixiert, wenn auch die Bewegungsfreiheit, mit der der Hauptwellenabschnitt 26 in dem Wälzlager 16 schwenken kann, ohne es zu beschädigen, eng begrenzt ist.

Die Außenverzahnung 17 des Basisflanschs 25 wirkt beim zweiten homokinetischen Gelenk 9 mit einer Innenverzahnung 18 einer Muffe 19 zusammen, die am Hauptwellenabschnitt 26 drehfest, aber so weit axial verschiebbar ist, dass der Eingriff zwischen den Verzahnungen 17, 18 aufgehoben werden kann. So bilden die Verzahnungen 17, 18 gleichzeitig eine Klauenkupplung, die in Fig. 2 in offener Stellung gezeigt ist. Eine nicht dargestellte Schaltgabel, die in eine umlaufende Nut 20 der Muffe 19 eingreift, dient zum Schließen der Klauenkupplung.

Wie in Fig. 1 zu erkennen, reicht der Hauptwellenabschnitt 26 nicht bis an den Boden des becherförmigen getriebeseitigen Wellenabschnitts 11. Da außerdem auch die Muffe 19 an dem Hauptwellenabschnitt 26 axial verschiebbar ist, ist es nach Lösen der die Flansche 24, 25 verbindenden Schrauben 30 möglich, den Hauptwellenabschnitt 26 zum Zapfwellengetriebe 6 hin zu verschieben und auf diese Weise, wie in Fig. 3 gezeigt, einen Spalt 10 zwischen den Flanschen 24, 25 zu öffnen. Durch diesen Spalt 10 kann ein Riemen hindurchgeführt und auf den als Riemenscheibe dienenden Flansch 24 oder 25 aufgezogen werden.

In der in Fig. 3 gezeigten Konfiguration ist der Hauptwellenabschnitt 26 koaxial zur Kurbelwelle 13 ausgerichtet, und ein Vorsprung 28 des Basisflanschs 25 liegt einer komplementären Aussparung 29 des motorseitigen Flansches 24 unmittelbar gegenüber. Indem bei einem Wiederzusammenbau zunächst der Vorsprung 28 in die Aussparung 29 eingeführt wird, gelangt der Hauptwellenabschnitt 26 in eine stabile, an seinen beiden Enden unterstützte Lage, in der Schraubenlöcher der Flansche 24, 25 miteinander fluchten und die Schrauben 30 leicht wieder gesetzt werden können.

Solange der Vorsprung 28 nicht in die Aussparungen 29 eingreift, ist der Hauptwellenabschnitt 26 nur an seinem motorfernen Ende 27 über das dortige Wälzlager 16 abgestützt. Um zu verhindern, dass dieses durch eine übermäßige Schrägstellung des Hauptwellenabschnitts 26 beschädigt wird, wenn dieser frei herabhängt, ist knapp unterhalb des Hauptwellenabschnitts 26 eine karosseriefeste Auflage 31 vorgesehen, die die Schwenkbewegungsfreiheit des Hauptwellenabschnitts 26 in der Trennstellung der Fig. 3 nach unten auf ein ungefährliches Maß beschränkt. Darüber hinaus greift, wie in Fig. 4 gezeigt, die Verjüngung 21 in der Trennstellung der Fig. 3 in das Wälzlager 16 ein. Auf diese Weise wird zwischen dem inneren Ring des Wälzlagers 16 und dem Hauptwellenabschnitt 26 ein radiales Spiel geschaffen, das beträchtliche Schwenkbewegungen des Hauptwellenabschnitts 26 zulässt, ohne dass dadurch ein Biegemoment auf das Wälzlager 16 einwirkt. Die dadurch erzielte Bewegungsfreiheit erlaubt es, den Hauptwellenabschnitt 26 in der Trennstellung so weit zu schwenken, dass die Flansche 24, 25 einander nicht mehr gegenüberliegen, und erleichtert so das Durchführen eines Riemens durch den Spalt 10.

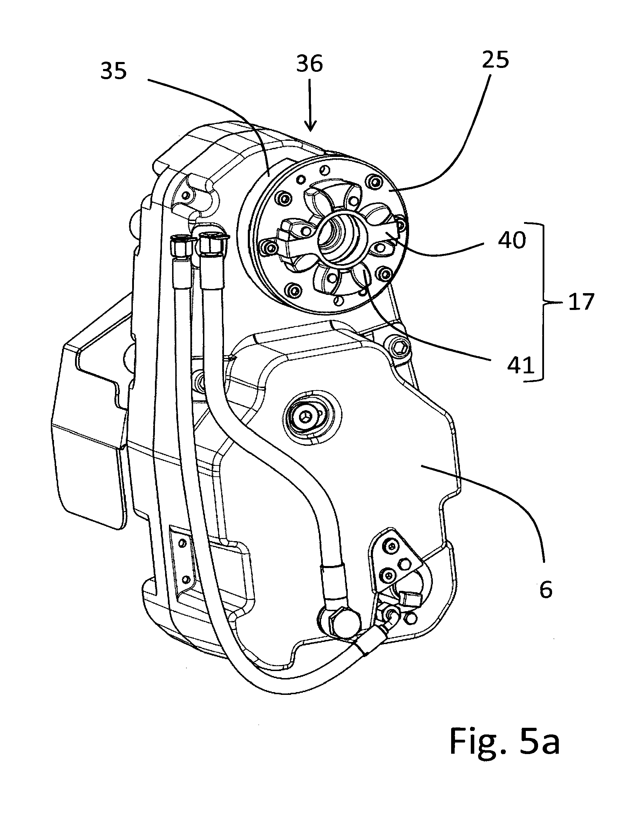

Fig. 5 zeigt in einer perspektivischen Ansicht die dem Motor 4 zugewandte Seite des Zapfwellengetriebes 6. Deutlich zu sehen ist der im Wesentlichen becherförmige getriebeseitige Wellenabschnitt 11 mit einer zentralen Aussparung 32, die so bemessen ist, dass wenn sie das Wälzlager 16 und das motorferne Ende 27 des Hauptwellenabschnitts 26 aufnimmt, ein äußerer Ring 33 (siehe Fig. 4) des Wälzlagers 16 reibschlüssig an einer Innenfläche 34 der Aussparung 32 anliegt. Die Aussparung 32 ist umgeben von einem Flansch 35, der vorgesehen ist, um den Basisflansch 25 des homokinetischen Gelenks 9 zu tragen. Der Flansch 35 und die Innenfläche 34 sind durch einen Schlitz 36 zweigeteilt, dessen Breite geringfügig größer ist als der Durchmesser des motorfernen Endes 27 des Hauptwellenabschnitts 26.

Der äußere Ring 33 des Wälzlagers 16 ist an dem Basisflansch 25 des homokinetischen Gelenks 9 befestigt, z.B., wie in Fig. 4 gezeigt, durch eine Schweißnaht 37, oder durch einen Schnappring oder durch in den Schlitz 36 eingreifende, den Ring 33 formschlüssig umfassende Klauen. Wenn die Schraubverbindung zwischen dem Basisflansch 25 und dem Flansch 35 gelöst ist, kann das komplette homokinetische Gelenk 9 am Hauptwellenabschnitt 26 axial verschoben werden. Bei dieser Verschiebung wird das am Flansch 35 befestigte Wälzlager 16 mitgenommen und aus der Aussparung 32 herausgezogen. In der Aussparung bleibt dann nur noch das motorferne Ende 27 des Hauptwellenabschnitts 26 zurück. Da dieses geringfügig schmaler ist als der Schlitz 36, kann es den Schlitz 36 passieren.
In Fig. 5a ist das Zapfwellengetriebe 6 nun mit aufgesetztem Basisflansch 25 auf den Flansch 35 gezeigt. Der Basisflansch 25 und der Flansch 35 sind demnach mit sechs am Umfang angeordneten Schrauben miteinander lösbar verschraubt. Zu sehen ist in dieser Darstellung, dass die Außenverzahnung 17 des Basisflansches 25 mit einem metallischen Halteelement 40 und einem sternförmigen elastischen Element 41 versehen ist, wodurch im Antriebsstrang der durch die Verzahnungen 17 und 18 gebildeten Klauenkupplung eine Schwingungsdämpfung erzielt wird. Dabei bewirken die acht radial abragenden Abschnitte des sternförmigen elastischen Elements 41 jeweils eine Torsionsdämpfung gegenüber vier davon eingeschlossenen Vorsprüngen auf dem Basisflansch 25.

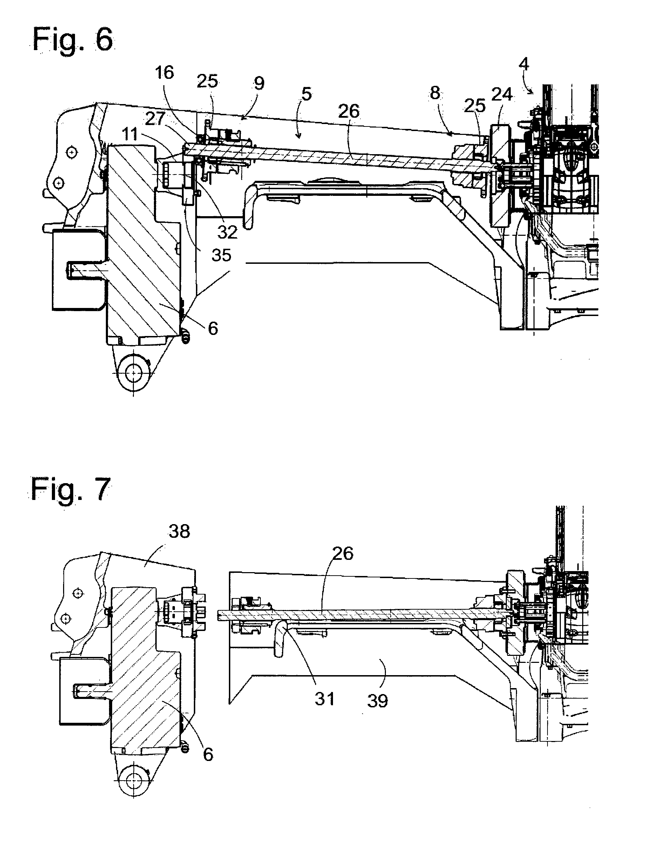

Wenn zusätzlich zu dem in Fig. 5 gezeigten gelösten Zustand des Basisflansches 25, wie in Fig. 6 dargestellt auch die Verbindung des homokinetischen Gelenks 8 zum Flansch 24 gelöst ist, dann kann der Hauptwellenabschnitt 26 einschließlich der Gelenke 8, 9 entnommen werden, und der Zwischenraum zwischen Motor 4 und Zapfwellengetriebe 6 ist für Arbeiten frei zugänglich.

Selbstverständlich besteht auch die Möglichkeit, die Flansche 24, 25 verbunden zu lassen und, wenn das Gelenk 9 axial verschoben und das Wälzlager 16 aus der Aussparung 32 herausgezogen worden ist, den Hauptwellenabschnitt 26 um eine von dem Gelenk 8 festgelegte Achse zu schwenken.

Auch in diesem Zustand kann die Auflage 31 die Schwenkbewegungsfreiheit des Hauptwellenabschnitts 26 einschränken. Daher besteht auch die Möglichkeit, wie in Fig. 7 gezeigt, im Bedarfsfall einen vorderen Karosserieabschnitt 38, der das Zapfwellengetriebe 6 umfasst, von einem hinteren oder Hauptkarosserieabschnitt 39 vollständig zu lösen und den Wellenabschnitt 26, dessen motorfernes Ende 27 dann nicht mehr am Wellenabschnitt gehalten ist, auf der Auflage 31 abzustützen.

### Bezugszeichen

- 4: Dieselmotor
- 5: Welle
- 6: Zapfwellengetriebe
- 7: Zapfwellenanschluss
- 8: homokinetisches Gelenk
- 9: homokinetisches Gelenk
- 10: Spalt
- 11: getriebeseitiger Wellenabschnitt
- 12: Hülse
- 13: Kurbelwelle
- 14: Außenverzahnung
- 15: Innenverzahnung
- 17: Außenverzahnung
- 18: Innenverzahnung
- 19: Muffe
- 20: Nut
- 21: Verjüngung
- 22: motorseitiger Wellenabschnitt
- 23: Gegenstück
- 24: Flansch
- 25: Basisflansch
- 26: Hauptwellenabschnitt
- 27: motorfernes Ende
- 28: Vorsprung
- 29: Aussparung
- 30: Schraube
- 31: Auflage
- 32: Aussparung
- 33: äußerer Ring
- 34: Innenfläche
- 35: Flansch
- 36: Schlitz
- 37: Schweißnaht
- 38: vord. Karosserieabschnitt
- 39: hint. Karosserieabschnitt
- 40: Halteelement
- 41: elastisches Element

## Patentansprüche

1. Traktor mit einem Motor (4), einem Zapfwellengetriebe (6) und einer eine Riemenscheibe (24, 25) tragenden, den Motor (4) mit dem Zapfwellengetriebe (6) verbindenden Welle (5), **dadurch gekennzeichnet, dass** an einem ersten Abschnitt (26) der Welle eine Hülse (16) axial zwischen einer Verriegelungsstellung, in der sie in eine Fassung (32) eines zweiten Abschnitts (11) der Welle (5) radial unbeweglich eingreift, und einer Entriegelungsstellung verschiebbar ist, in der ein Endstück (27) des ersten Abschnitts (26) der Welle (5) frei ist, eine seitliche Öffnung (36) der Fassung (32) zu passieren.

2. Traktor nach Anspruch 1, **dadurch gekennzeichnet, dass** die Hülse (16) ein Wälzlager (16) ist.

3. Traktor nach Anspruch 1 oder 2, **dadurch gekennzeichnet, dass** ein äußerer Ring (33) des Wälzlagers (16) aufweist in der Verriegelungsstellung eine Innenfläche (34) der Fassung (32) berührt.

4. Traktor nach Anspruch 1, 2 oder 3, **dadurch gekennzeichnet, dass** die Hülse (16) in der Verriegelungsstellung durch einen an der Fassung (32) lösbar befestigten Flansch (25) gesichert ist, wobei der erste Abschnitt (26) der Welle sich durch eine Öffnung des Flansches (25) erstreckt, dessen radiale Abmessung kleiner ist als die der Hülse (16).

5. Traktor nach Anspruch 4, **dadurch gekennzeichnet, dass** die Hülse (16) an dem Flansch (25) befestigt ist.

6. Traktor nach einem der vorhergehenden Ansprüche, **dadurch gekennzeichnet, dass** ein homokinetisches Gelenk (9) mit zwei gegeneinander schwenkbaren Gelenkhälften (25, 17; 18, 19) zur Drehmomentübertragung zwischen erstem (26) und zweitem Abschnitt (11) der Welle (5) vorgesehen ist.

7. Traktor nach Anspruch 6, soweit auf Anspruch 4 rückbezogen, **dadurch gekennzeichnet, dass** der Flansch (25) eine der zwei Gelenkhälften bildet.

8. Traktor nach Anspruch 6 oder 7, **dadurch gekennzeichnet, dass** eine der zwei Gelenkhälften (18, 19) an dem ersten Wellenabschnitt (26) drehfest und axial verschiebbar ist.

9. Traktor nach Anspruch 8, **dadurch gekennzeichnet, dass** die zwei Gelenkhälften (25, 17; 18, 19) durch eine Axialbewegung miteinander in Eingriff und außer Eingriff bringbare Verzahnungen (17, 18) aufweisen.

10. Traktor nach Anspruch 9, **dadurch gekennzeichnet, dass** die eine Gelenkhälfte (18, 19) eine in Umfangsrichtung umlaufende Kontur (20) aufweist und die axiale Position der Gelenkhälfte durch eine an der Kontur (20) angreifende Schaltgabel oder eine sonstige Betätigungseinrichtung gesteuert ist.

11. Traktor nach einem der vorhergehenden Ansprüche, **dadurch gekennzeichnet, dass** von erstem und zweitem Wellenabschnitt (26, 11) einer (26) zwischen dem anderen (11) und einem dritten Wellenabschnitt (22) angeordnet und mit dem dritten Wellenabschnitt (22) durch ein zweites homokinetisches Gelenk (8) verbunden ist.

12. Traktor nach einem der vorhergehenden. Ansprüche, **dadurch gekennzeichnet, dass** von erstem und zweitem Wellenabschnitt (26, 11) einer (26) in der Entriegelungsstellung entnehmbar ist.

13. Traktor nach einem der vorhergehenden Ansprüche, **dadurch gekennzeichnet, dass** die Welle (5) eine Riemenscheibe trägt.

## Claims

1. A tractor comprising an engine (4), a power take-off transmission (6) and a shaft (5) carrying a belt pulley (24, 25) and connecting the engine (4) to the power take-off transmission (6), **characterised in that** at a first portion (26) of the shaft a sleeve (16) is axially displaceable between a locking position in which it radially immovably engages into a socket (32) of a second portion (11) of the shaft (5) and an unlocking position in which an end piece (27) of the first portion (26) of the shaft (5) is free to pass a lateral opening (36) of the socket (32).

2. A tractor according to claim 1 **characterised in that** the sleeve (16) is a rolling bearing (16).

3. A tractor according to claim 1 or claim 2 **characterised in that** an outer ring (33) of the rolling bearing (16) in the locking position contacts an inside surface (34) of the socket (32).

4. A tractor according to claim 1, claim 2 or claim 3 **characterised in that** the sleeve (16) is secured in the locking position by a flange (25) releasably fixed to the socket (32), wherein the first portion (26) of the shaft extends through an opening in the flange (25), whose radial dimension is less than that of the sleeve (16).

5. A tractor according to claim 4 **characterised in that** the sleeve (16) is fixed to the flange (25).

6. A tractor according to one of the preceding claims **characterised in that** a homokinetic joint (9) having two joint halves (25, 17; 18, 19) which are pivotable relative to each other is provided for torque transmission between the first portion (26) and the second portion (11) of the shaft (5).

7. A tractor according to claim 6 when appended to claim 4 **characterised in that** the flange (25) forms one of the two joint halves.

8. A tractor according to claim 6 or claim 7 **characterised in that** one of the two joint halves (18, 19) is non-rotatable and axially displaceable on the first shaft portion (26).

9. A tractor according to claim 8 **characterised in that** the two joint halves (25, 17; 18, 19) have tooth arrangements (17, 18) which can be brought into engagement with each other and out of engagement by an axial movement.

10. A tractor according to claim 9 **characterised in that** the one joint half (18, 19) has a contour (20) extending in the peripheral direction and the axial position of the joint half is controlled by a shift fork engaging the contour (20) or another actuating device.

11. A tractor according to one of the preceding claims **characterised in that** of the first and second shaft portions (26, 11) one (26) is arranged between the other (11) and a third shaft portion (22) and is connected to the third shaft portion (22) by a second homokinetic joint (8).

12. A tractor according to one of the preceding claims **characterised in that** of the first and second shaft portion (26, 11) one (26) is removable in the unlocking position.

13. A tractor according to one of the preceding claims **characterised in that** the shaft (5) carries a belt pulley.

## Revendications

1. Tracteur comprenant un moteur (4), une transmission de prise de force (6) et un arbre (5) portant une poulie à courroie (24, 25) et reliant le moteur (4) à la transmission de prise de force (6), **caractérisé en ce que**, sur une première portion (26) de l'arbre, un manchon (16) peut coulisser axialement entre une position de verrouillage, dans laquelle il s'engage sans possibilité de déplacement radial dans une douille (32) d'une deuxième portion (11) de l'arbre (5), et une position de déverrouillage, dans laquelle un embout (27) de la première portion (26) de l'arbre (5) est libre de passer par une ouverture latérale (36) de la douille (32).

2. Tracteur selon la revendication 1, **caractérisé en ce que** le manchon (16) est un palier à roulement (16).

3. Tracteur selon la revendication 1 ou 2, **caractérisé en ce que**, dans la position de verrouillage, une bague extérieure (33) du palier à roulement (16) est en contact avec une surface intérieure (34) de la douille (32).

4. Tracteur selon la revendication 1, 2 ou 3, **caractérisé en ce que**, dans la position de verrouillage, le manchon (16) est bloqué par une bride (25) fixée de manière détachable à la douille (32), la première portion (26) de l'arbre s'étendant à travers une ouverture de la bride (25) dont la dimension radiale est plus petite que celle du manchon (16).

5. Tracteur selon la revendication 4, **caractérisé en ce que** le manchon (16) est fixé à la bride (25).

6. Tracteur selon l'une des revendications précédentes, **caractérisé en ce qu'**un joint homocinétique (9) comportant deux demi-joints (25, 17 ; 18, 19) pouvant pivoter l'un par rapport à l'autre est prévu pour transmettre le couple entre la première (26) et la deuxième portion (11) de l'arbre (5).

7. Tracteur selon la revendication 6, lorsqu'elle dépend de la revendication 4, **caractérisé en ce que** la bride (25) forme un des deux demi-joints.

8. Tracteur selon la revendication 6 ou 7, **caractérisé en ce qu'**un des deux demi-joints (18, 19) est fixe en rotation et coulissant axialement sur la première portion d'arbre (26).

9. Tracteur selon la revendication 8, **caractérisé en ce que** les deux demi-joints (25, 17 ; 18, 19) présentent des dentures (17, 18) pouvant être mises en prise et hors prise par un mouvement axial.

10. Tracteur selon la revendication 9, **caractérisé en ce qu'**un demi-joint (18, 19) présente un contour périphérique (20) dans la direction circonférentielle, et **en ce que** la position axiale du demi-joint est commandée par une fourchette de commande ou par un autre moyen d'actionnement agissant sur le contour (20).

11. Tracteur selon l'une des revendications précédentes, **caractérisé en ce que**, concernant la première et la deuxième portion d'arbre (26, 11), l'une (26) est disposée entre l'autre (11) et une troisième portion d'arbre (22) et est reliée à la troisième portion d'arbre (22) par un deuxième joint homocinétique (8).

12. Tracteur selon l'une des revendications précédentes, **caractérisé en ce que**, concernant la première et la deuxième portion d'arbre (26, 11), l'une (26) peut être retirée dans la position de déverrouillage.

13. Tracteur selon l'une des revendications précédentes, **caractérisé en ce que** l'arbre (5) porte une poulie à courroie.
